(19) Europäisches Patentamt
European Patent Office
Office européen des brevets

(11) Numéro de publication: **0 420 714 A1**

# (12) DEMANDE DE BREVET EUROPEEN

(21) Numéro de dépôt: **90402513.7**

(22) Date de dépôt: **12.09.90**

(51) Int. Cl.5: **C04B 35/58**, C04B 35/00, C08G 77/62

Le titre de l'invention a été modifié (Directives relatives à l'examen pratiqué à l'OEB, A-III, 7.3)

(30) Priorité: **21.09.89 FR 8912389**

(43) Date de publication de la demande: **03.04.91 Bulletin 91/14**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Broussaud, Daniel**
**1, Résidence du Grimpé**
**F-91140 Villebon/Sur/Yvette(FR)**
Inventeur: **Chane-Ching, Jean-Yves**
**5, rue Gambetta**
**F-95880 Enghien/Les/Bains(FR)**

(74) Mandataire: **Dubruc, Philippe et al**
**RHONE-POULENC CHIMIE Service Brevets Chimie 25, quai Paul-Doumer**
**F-92408 Courbevoie Cédex(FR)**

## (54) Procédé de préparation d'un composite en nitrure et carbure de silicium.

(57) L'invention concerne la préparation d'un composite $Si_3N_4$-SiC.

Selon l'invention, on forme une pièce crue que l'on imprègne d'un additif du type organopolysilazane. Après imprégnation, le produit est fritté.

EP 0 420 714 A1

Xerox Copy Centre

## PROCEDE DE PREPARATION D'UN COMPOSITE $Si_3N_4$-SIC

La présente invention concerne un procédé de préparation d'un composite $Si_3N_4$-SiC.

On sait que le nitrure de silicium présente une grande dureté, une bonne tenacité et une excellente résistance aux chocs thermiques. Cependant, le frittage du $Si_3N_4$ nécessite classiquement une deuxième phase intergranulaire et la présence de cette phase diminue malheureusement les propriétés de $Si_3N_4$ dans son utilisation à température élevée. On pallie à ce problème en incorporant au $Si_3N_4$ du SiC.

Toutefois, la préparation de tels composites $Si_3N_4$-SiC présente un certain nombre de problèmes.

C'est ainsi gue dans le cas de la fabrication de composites à matrice $Si_3N_4$ renforcés par SiC, on utilise habituellement SiC sous forme de whiskers. Or la manipulation de ces whiskers est délicate et pose des problèmes de sécurité et d'hygiène.

D'autre part, la préparation de composites $Si_3N_4$-SiC par mélange de poudres de ces éléments ou de précurseurs de ceux-ci, puis frittage réactif ou non, donne généralement des matériaux de densité insuffisante. En plus ce frittage se fait habituellement sous ce qui, du point de vue industriel, complique le procédé et réduit sa productivité.

L'objet principal de l'invention est par conséquence un procédé permettant d'obtenir à la suite du frittage notamment naturel un composite $Si_3N_4$-SiC de forte densité.

Dans ce but le procédé selon l'invention de préparation d'un composite $Si_3N_4$-SiC est du type dans lequel on forme une pièce crue et on fritte cette pièce et il est caractérisé en ce qu'on utilise comme additif dans cette préparation un organopolysilazane.

Grâce au procédé de l'invention, on obtient des produits frittés présentant une densité d'environ 95% de la densité théorique.

D'autres caractéristiques et détails de l'invention seront mieux compris à la lecture de la description et des exemples non limitatifs qui vont suivre.

La caractéristiques principale de l'invention est, comme on l'a vu plus haut, l'utilisation d'un organopolysilazane dans la préparation du composite.

Les organopolysilazanes sont des produits bien connus et de préparation aisée.

Plus particulièrement, on peut utiliser comme produit de ce type le produit de réaction d'au moins un organohalogénosilane ou d'au moins un organohalogénodisilane avec un composé organique ou organosilylé comportant au moins un groupement $NH_2$ ou NH.

Généralement l'organohalogénosilane est choisi parmi les produits de formule (I).

$R_aX_{4-a}si$ (I)

dans laquelle X désigne un halogène et les radicaux R, identiques ou différents, sont choisis parmi l'hydrogène, un radical alkyle linéaire ou ramifié éventuellement halogéné, un radical cycloalkyle, un radical aryle tel que le radical phényle et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3.

On notera qu'on utilise plus particulièrement le ou les organohalogénosilane choisi dans les groupe des alxylhalogénosilane.

Dans la formule (I), comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohexyle et cycloheptyle ; R arylalkyle : les radicaux benzyle, phénylethyle ; R alkylaryle : les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCl_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2 = CH)SiCl_2$

$(CH_3)_2 (CH_2 = CH) SiCl$, $(C_6H_5)_2 (CH_2 = CH)SiCl$

$(C_6H_5)(CH_2 = CH) SiCl_2$, $CH_3(C_6H_5)(CH_2 = CH) SiCl$.

En ce qui concerne le composé précité comportant au moins un groupement $NH_2$ ou NH, on peut citer notamment l'ammoniac, les amines primaires ou secondaires, les silylamines, les amides, les hydrazines, les hydrazides.

Comme exemple, on peut mentionner : la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldipnényldivinyldisilazane et le tétraméthyldisilazane.

Les organopolysilazanes obtenus en fin de réaction englobent plus spécifiquement :

1 - les polymères linéaires répondant aux formules :

$H_2N\ (R_2SiNH)_p\ SiR_2\ NH_2$ (II)

et

$R_3SiNH(R_2SiNH)_{p'}\ SiR_3$ (III)

dans lesquelles R a la signification donnée pour la formule (I) ; p et p′ sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$(R_2SiNH)_n$ (IV)

dans laquelle n est compris entre 3 et 10, généralement n = 3,4 et R a la signification donnée pour la formule (5) ci-dessus. Ils sont décrits notamment dans le brevet britannique GB-A.881.178.

3 - les polymères résineux ou ramifiés formés de motifs choisis parmi ceux de formule $R_3SiNH_{0,5}$, $R_2SiNH$, $RSiNH_{1,5}$, $Si(NH)_2$.

Ces polymères résineux sont utilisés préférentiellement dans le cadre de la présente invention.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Ces polymères résineux renferment en quantité prépondérante des liaisons Si-NH-Si et en quantité moindre des liaisons $SiNH_2$ et comportant parfois en dehors des polymères réticulés, des polymères linéaires et cycliques; ces derniers ne pouvant se former si, parmi les organochlorosilanes de départ se trouvent des diorgsnodichlorosilanes.

On utilisera de préférence les polymères résineux issus de l'ammonolyse d'un mélange d'un dialkyldichlorosilane (D) avec un alkyltrichlorosilane (T) dans un rapport molaire T/D conpris entre 0,1 et 9 et notamment 1 et 4.

Il est même possible d'utiliser dans le cadre de la présente invention des organopoly(disilyl)silazanes qui sont également des produits bien connus en soi et aisés à préparer. Ils peuvent être notamment préparés par action du composé organique ou organosilylé précédemment mentionné sur au moins un organohalogénodisilane de formule :

$R_bX_{3-b}Si\ Si\ R_cX_{3-c}$ (V)

dans laquelle les radicaux R identiques ou différents ont la signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2\ ClSiSi\ (CH_3)_2\ Cl$, $(CH_3)_2Cl\ SiSi\ CH_3\ Cl_2$

$CH_3\ Cl_2\ SiSi\ CH_3\ Cl_2$

Comme exemples de composés comportant au moins un groupement $NH_2$ et NH utilisables pour la synthèse des poly(disilyl)silazanes, on peut citer les mêmes composés que ceux cités ci-dessus pour l 'aminolyse des organohalogénomonosilanes.

De manière générale, la réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

En outre toujours dans le cadre de l'invention, il est possible d'utiliser des organopoly (disilyl) silazanes-silazanes préparés, comme décrit dans le brevet EP-A 75826, par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de préparés à partir d'un composé aminé comme indiqué ci-dessus sont appelés aminolysats qui incluent donc les ammonolysats.

Bien entendu et selon une variante de l'invention, il est également possible d'utiliser à titre de polysilazanes des polysilazanes qui, issus des réactions d'aminolyse décrites ci-dessus, ont subi une polymérisation et/ou une copolymérisation et/ou un rearrangement des molécules, et ceci dans le but

d'augmenter encore leur poids moléculaire, mais tout en gardant aux polysilazanes obtenus leur caractère fusible et soluble dans les solvants organiques.

Cette polymérisation ou ce réarrangement peut se faire par des traitements catalytiques bien connus.

Les conditions de mise en oeuvre de tels traitements catalytiques sont décrites notamment dans les documents suivants, tous cités à titre de références non limitatives : US-A-3.007.886, US-A-3.187.030, FR-A-2.577.933, FR-2.590.584.

Le FR-A-2.577.933 décrit notamment un traitement permettant de réarranger et surréticuler le réseau de l'aminolysat par mise en oeuvre des acides $HClO_4$ et $CF_3SO_3H$.

Il est également possible d'utiliser à titre de polysilazanes des copolymères silanes-silazanes obtenus par polycondensation, en milieu solvant et en présence d'un métal alcalin, notamment le sodium, entre des silanes chlorés et des disilazanes chlorés, comme décrit
dans la demande de brevet français déposée sous le n° 87 08091, ou bien encore des polycarbosilazanes obtenus par thermolyse, de préférence opérée sous atmosphère inerte et à une température comprise entre 250 °C et 550 °C, des copolymères ci-dessus.

De préférence, on opérera sur des polysilazanes de départ présentant par molécule au moins un groupement $\overline{=}$ Si-NH-.

Selon l'invention, l'organopolysilazane peut être utilisé à différents moments du procédé de préparation du copposite $Si_3N_4$-SiC et même dans différents procédés de préparation de ce même composite.

C'est ainsi qu'il peut être ajouté à un mélange de poudres de $Si_3N_4$ et SiC qui est ensuite fritté, ou à un mélange de poudres de SiC et Si soumis ensuite à une nitruration.

Un procédé pour lequel l'invention s'applique particulièrement bien est celui dans lequel le composite $Si_3N_4$-SiC est obtenu après formation d'une barbotine, obtention d'une pièce crue puis frittage de cette pièce.

Dans ce cas, on forme la pièce crue puis on imprègne cette pièce avec l'organopolysilazane.

Avant de décrire plus en détail ce procédé, on rappelera que la barbotine est obtenue d'une manière connue en soi. Il peut s'agir par exemple d'une barbotine aqueuse préparée par mise en suspension de poudres de $Si_3N_4$ et SiC. On peut aussi incorporer a cette barbotine des additifs de frittage classiques tels que par exemple $Al_2O_3$, $Y_2O_3$, AlN utilisés seuls ou en mélange.

En ce qui concerne la nature des poudres, on part de préférence de poudre $Si_3N_4$ $\alpha$ de teneur en oxygène inférieure à 2%, en carbone inférieure à 0,3%, de taille de particules de l'ordre du micron et de surface spécifique habituellement de l'ordre de 20 m2/g.

Pour SiC, on peut utiliser indifféremment la forme alpha ou béta. De préférence on emploie du SiC à teneur en oxygène inférieure à 2%, notamment inférieure à 1%, de taille de particules de l'ordre de 1 à 10 $\mu$m et de surface spécifique inférieure à 20 m2/g.

En ce qui concerne les proportions des constituants de cette barbotine pour 100 parties en poids de $Si_3N_4$, on utilise de préférence au moins 5 parties en poids de SiC, généralement entre 5 et 30; au moins 4 parties en poids, généralement entre 6 et 20, pour les additifs de frittage.

D'une manière connue en soi, on peut incorporer à la barbotine un dispersant type sels d'acides carboxyliques ou esters phosphoriques.

Bien qu'il ne s'agisse pas d'un mode de réalisation préférentiel, il est possible sans sortir du cadre de l'invention d'utiliser pour la préparation de la barbotine, du SiC sous forme trichite (whisker) c'est-à-dire de particules aciculaires par exemple de 0,1 à 10$\mu$m de diamètre et de 50 à 200$\mu$m de longueur. Ce qui a été dit plus haut en ce qui concerne la forme et la pureté chimique s'applique aussi ici.

D'une manière connue en soi, après délayage, on obtient une barbotine homogène en composition chimique. Dans un deuxième temps, on cherche à obtenir la pièce crue. Ce passage à la pièce crue peut se faire par toute technique connue de l'homme de l'art. Par exemple, on peut couler la barbotine dans un moule ou encore sécher celle-ci par atomisation par exemple; le mélange ainsi séché peut être mis en forme d'une manière connue (injection, pressage, extrusion...). On travaille généralement dans des conditions telles qu'on obtienne une pièce crue de densité comprise entre 40 et 65% de la densité théorique.

L'infiltration peut se faire en maintenant la pièce crue, débarrassée des éventuels additifs de mise en forme, dans une solution de l'organopolysilazane dans un solvant. Comme solvant, on choisit un produit qui, bien entendu, est un solvant de l'organopolysilazane mais qui peut aussi assurer une bonne infiltration.

A titre d'exemple, ce solvant peut être choisi dans les hydrocarbures aliphatiques tels que l'hexane, le cyclohexane, le méthylcyclohexane, dans les hydrocarbures aromatiques comme le benzène, le toluène. Les phénols sont par contre à éviter. Le solvant peut aussi être choisi dans le groupe des solvants chlorés comme le trichloréthylène, le tétrachlorure de carbone; dans le groupe des cétones ou des acétates.

La concentration en organopolysilazane dans ledit solvant et plus particulièrement dans le cas où celui-ci est l'hexane, varie entre 10 et 60% en poids, et de préférence entre 40 et 60% en poids.

L'infiltration se fait de préférence sous vide partiel par exemple sous une pression comprise entre 300 et 700 mm de Hg.

Le temps est adapté pour avoir une infiltration à coeur de la pièce traitée.

On utilise l'organopolysilazane dans des quantités telles, qu'après frittage, la quantité de matière, en poids, exprimée sous la forme de SiCN et apportée par l'organopolysilazane, varie entre 1 et 15%, et plus particulièrement entre 6 et 13% rapportée au poids total du composite.

Une fois l'imprégnation réalisée, on sèche et on décrasse sous atmosphère inerte. On peut ensuite procéder au frittage par exemple en lit de poudre sous atmosphère d'azote ou dans une enceinte sous légère pression d'azote, environ 10 bars.

Le frittage se fait d'une manière connue en soi. Habituellement, le frittage est réalisé à une température comprise entre 1700 et 1850 °C.

Les vitesses de montée en température sont par exemple de 20 à 400 °C/h, le palier de frittage peut varier entre 1 et 4 heures et les vitesses de descente en température sont semblables à celles de montée.

Il est à noter que le procédé de l'invention permet de réaliser un frittage sans pression.

Le produit obtenu est sous forme polycristalline composée de grains de $Si_3N_4$ et SiC sous forme $\alpha$ et $\beta$.

L'examen microstructural par microscopie électronique à balayage montre la présence de grains de forme anisotrope de dimension inférieure à 6µm et plus particulièrement de l'ordre de 1 à 2µm de longueur et d'épaisseur de 0,2 à 0,5 µm.

Des exemples concrets vont maintenant être donnés.

EXEMPLE 1

On réalise une barbotine aqueuse contenant 60 g de $Si_3N_4$ provenant de la Société UBE, qualité SNE 10, 3 g d'$Al_2O_3$, 3 g d'$Y_2O_3$, 6 g de SiC a provenant de la Société LONZA (qualité UF 15) et 105 g d'eau. $Si_3N_4$ et SiC ont tous les deux un diamètre moyen d'environ 0,3µm. Après délayage en jarres à billes durant 1 h, la barbotine est coulée dans un moule à plâtre. Après séchage, des échantillons homogènes en poudre céramique sont post-compactés de façon isostatique à 1 T/cm2. Deux pièces cylindriques A et B de masse d'environ 4 g sont obtenues.

On utilise ensuite un polysilazane préparé par coammonolyse en milieu solvant de $(CH_3)_2SiCl_2$ et $CH_3SiCl_3$ de la manière suivante :

Dans un réacteur de 3 litres double enveloppe muni d'une agitation mécanique, d'un tube d'entrée de gaz et d'un condenseur, on introduit sous azote sec :

0,25 mole de $(CH_3)_2SiCl_2$ et 0,75 mole de $CH_3SiCl_3$ en présence de 1,1 litre d'éther isopropylique. Le mélange est refroidi à 3 °C et est maintenu à cette température pendant l'introduction de $NH_3$ gazeux - réaction légèrement exothermique -. Le débit d'introduction de $NH_3$ est maintenu à environ 6 ml/s de gaz et l'addition a lieu en 6 heures.

Il se forme au cours de l'essai des quantités importantes de chlorhydrate d'ammonium qui épaississent la solution. En fin d'essai, on filtre le $NH_4Cl$ formé sur verre fritté (diamètre moyen des pores 10 µm). Le précipité est lavé plusieurs fois à l'aide de solvant sec. La solution récupérée est limpide. Les solvants sont évaporés sous vide (25 mbar à 70 °C) et les dernières traces de solvant sont éliminées à 70 °C sous 2 mbars.

On obtient un coammonolysat constitué de motifs :

$D^N$ = 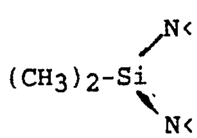 et $T^N$ = 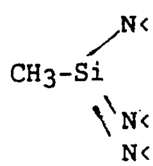

dans le rapport 25/75.

Le coammonolysat ainsi obtenu est ensuite traité à l'acide triflique $CF_3SO_3H$ (4500 p.p.m.). Le milieu de polymérisation est constitué par le produit à 40% dans l'éther isopropylique. La durée de polymérisation est de 6 heures. La température de 120 °C. On obtient un produit solide de rapport $T^N/D^N$ de 75/25 déterminé par RMN du $^{29}Si$.

La pièce A est maintenue dans un solution à 56% en masse du polysilazane obtenu ci-dessus dans

l'hexane sous vide partiel d'environ 400 mm de Hg durant 5 heures. Cet échantillon est alors séché, décrassé sous atmosphère inerte (azote) jusqu'à 700 °C suivant le profil ci-dessous : montée en température de 25 °C/h jusqu'à 700 °C et maintien à 700 °C 1 heure. Après décrassage, on note un gain de masse d'environ 12% par rapport à la masse initiale. Le frittage est alors réalisé en lit de poudre ($Al_2O_3$ 10%, $Y_2O_3$ 10%/$Si_3N_4$ 40% - BN 40% en poids) dans un creuset BN à 1780 °C sous atmosphère $N_2$ d'après le profil suivant : montée en température de 100 °C/h jusqu'à 1780 °C, maintien à 1780 °C durant 4 heures. L'échantillon A fritté présente une densité de 3,07, soit 95% de la densité théorique.

Une densité frittée de 2,58 est obtenue après frittage réalisé de manière comparative sur l'échantillon B témoin qui n'a pas subi d'infiltration.

Le matériau présente une microstructure comportant des grains anisotropes de longueur 1,5μm, d'épaisseur 0,2μm.

EXEMPLE 2

On prépare une barbotine identique à celle de l'exemple 1 mais comprenant 12 g de SiC.

On procède ensuite comme dans l 'exemple 1 et on obtient deux échantillons C et D.

L'échantillon C subit le même traitement d'infiltration que l'échantillon A de l'exemple 1. On décrasse et on fritte ensuite les échantillons C et D de manière identique à celle décrite dans ce même exemple, mais à une température de 1830 °C.

On observe pour l'échantillon C un gain de masse de 11,30% après décrassage. Après frittage à 1830 °C, la densité de C est de 3,0 soit 92% de la densité théorique.

Pour l'échantillon D, la densité est de 2,74 soit 84% de la densité théorique.

**Revendications**

1 - Procédé de préparation d'un composite $Si_3N_4$-SiC du type dans lequel on forme une pièce crue et on fritte cette pièce caractérisée en ce qu'on utilise comme additif dans cette préparation un organopolysilazane.

2 - Procédé selon la revendication 1, caractérisé en ce qu'on imprègne la pièce crue avec l'organopolysilazane.

3 - Procédé selon la revendication 1 ou 2 caractérisé en ce qu'on forme la pièce crue à partir d' une barbotine comprenant le nitrure et le carbure de silicium.

4 - Procédé selon la revendication 2 ou 3, caractérisé en ce qu'on imprègne la pièce crue en maintenant ladite pièce dans une solution de l'organopolysilazane dans un solvant sous vide partiel.

5 - Procédé selon l'une des revendications précédentes, caractérisé en ce qu'on utilise comme organopolysilazane un produit de réaction d'au moins un organohalogénosilane ou d'au moins un organohalogénodisilane avec un composé organique ou organosilylé comportant au moins un groupement $NH_2$ ou NH.

6 - Procédé selon la revendication 5 caractérisé en ce qu'on utilise un organopolysilane issu de la réaction précitée dans laquelle le ou les organohalogénosilanes sont choisis dans le groupe des alkylhalogénosilane.

7 - Procédé selon l'une des revendications précédentes, caractérisé en ce qu'on utilise un organopolysilazane se présentant sous la forme d'un polymère résineux ou ramifié.

8 - Procédé selon la revendication 7 caractérisé en ce qu'on utilise un polymère résineux issu de l'ammonolyse d'un mélange d'un dialkyl dichlorosilane (D) et d'un alkyltrichlorosilane (T) dans un rapport molaire T/D compris entre 0,1 et 9 et plus particulièrement 1 et 4.

9 - Procédé selon l'une des revendications 5 à 8, caractérisé en ce qu'on utilise comme additif un produit issu de la polymérisation ou d'un réarrangement des molécules des organopolysilazanes précités.

Office européen des brevets

# RAPPORT DE RECHERCHE EUROPEENNE

Numéro de la demande

**EP 90 40 2513**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 197 829 (BAYER AG)<br>* revendications 1,9; page 9, ligne 21 - page 10, ligne 21 *; & US-A-3892853 (cat. D)<br>- - - | 1-7 | C 04 B 35/58<br>C 04 B 35/00<br>C 08 G 77/62 |
| X | FR-A-2 190 764 (BAYER AG)<br>* revendications 1-3; page 8, ligne 1 - page 9, ligne 7 *; & US-A-3853567 (cat. D)<br>- - - | 1-9 | |
| X | US-A-4 552 786 (P.L. BERNEBURG et al.)<br>* revendications 1,5 *<br>- - - | 1-4 | |
| X | EP-A-0 202 170 (RHONE-POULENC)<br>* revendications 1,14 *<br>- - - | 1-4 | |
| X | EP-A-0 331 424 (TOA NENRYO)<br>* le document en entier *<br>- - - | 1-4 | |
| A | EP-A-0 235 486 (RHONE POULENC)<br>& FR-A-2590584 (cat. D)<br>- - - | | |
| A | EP-A-0 296 028 (SOC. EUR. DE PROPULSION)<br>& FR-A-8708091 (cat. D)<br>- - - | | **DOMAINES TECHNIQUES RECHERCHES (Int. Cl.5)** |
| A | EP-A-0 197 863 (RHONE POULENC)<br>- - - | | C 04 B 35/00<br>C 08 G 77/00 |
| A | EP-A-0 075 826 (DOW CORNING)<br>- - - | | |
| A | US-A-4 340 619 (J.H. GAUL)<br>& FR-A-2497812 (cat. D)<br>- - - | | |
| A | US-A-4 404 153 (J.H. GAUL)<br>& FR-A-2497812 (cat. D)<br>- - -<br>-/- | | |

Le présent rapport de recherche a été établi pour toutes les revendications

| Lieu de la recherche | Date d'achèvement de la recherche | Examinateur |
|---|---|---|
| Berlin | 17 décembre 90 | KESTEN W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant

Office européen des brevets

# RAPPORT DE RECHERCHE EUROPEENNE

Numéro de la demande

**EP 90 40 2513**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 312 970 (J.H. GAUL)<br>& BE-A-888787 (cat. D)<br>----- | | |
| | | | DOMAINES TECHNIQUES RECHERCHES (Int. Cl.5) |

Le présent rapport de recherche a été établi pour toutes les revendications

| Lieu de la recherche | Date d'achèvement de la recherche | Examinateur |
|---|---|---|
| Berlin | 17 décembre 90 | KESTEN W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant